# EUROPÄISCHE PATENTSCHRIFT

(11) **EP 0 413 851 B1**
(45) Veröffentlichungstag und Bekanntmachung des Hinweises auf die Patenterteilung: **26.10.1994**
(21) Anmeldenummer: 89117541.6
(22) Anmeldetag: 22.09.1989
(51) Int. Cl.: F16C 39/06, F04D 19/04

(54) **Lagerring für Magnetlager**
Bearing ring for magnetic bearing
Anneau de palier pour palier magnétique

(30) Priorität: 25.08.1989 EP 89115660
(43) Veröffentlichungstag der Anmeldung: 27.02.1991
(73) Patentinhaber: Balzers und Leybold Deutschland Holding Aktiengesellschaft, 63450 Hanau (DE); FORSCHUNGSZENTRUM JÜLICH GMBH, D-52425 Jülich (DE)
(72) Erfinder: Kabelitz, Hans-Peter, Dr., D-5000 Köln 90 (DE); Lässig, Harald, D-5064 Rösrath (DE); Dr. Johann K. Fremerey, 5300 Bonn (DE)
(74) Vertreter: Leineweber, Jürgen, Dipl.-Phys.

(56) Entgegenhaltungen:
- EP-A- 332 979
- EP-A- 0 097 590
- DE-A- 1 750 602
- FR-A- 2 165 633

## Beschreibung

Die Erfindung bezieht sich auf ein Verfahren zur Herstellung eines Lagerringes zur Verwendung in magnetgelagerten Vakuumpumpen, vorzugsweise Turbomolekularvakuumpumpen. Außerdem betrifft die Erfindung einen nach diesem verfahren hergestellten Lagerring.

Turbomolekularvakuumpumpen werden u. a. in der Halbleiterindustrie eingesetzt und dienen der Evakuierung von Kammern, in denen Plasmaprozesse ablaufen. Beim Ablauf derartiger Prozesse entstehen eine Vielzahl aggressiver Gase, wie z. B. Wasserstoff, Sauerstoff, Halogene, Verbindungen dieser Gase usw., welche elementar, molekular und/oder auch als Radikale vorliegen. Kritisch sind diese Gase vor allem für fett- oder ölgeschmierte Lagerungen. Es ist deshalb erstrebenswert, Vakuumpumpen für diese Einsatzzwecke mit Magnetlagerungen zu betreiben. Passive oder zumindest weitgehend passive, also mit Permanentmagneten ausgerüstete Magnetlagerungen haben sich als besonders vorteilhaft erwiesen.

Die bei derartigen Lagern verwendeten Magneten enthalten in der Regel Seltenerdenelemente, beispielsweise Neodym oder Samarium. Die Verwendung von Eisen-Neodym-Bor-Magneten oder Kobalt-Samarium-Magneten ist für diese Zwecke bekannt.

Magnetwerkstoffe dieser Art werden insbesondere von Wasserstoff angegriffen. Es ist deshalb bereits versucht worden, Magnete, die in Vakuumpumpen eingesetzt werden sollen, mit einer Hartstoffschicht zu versehen. Diese Schichten haben sich als nicht H₂-dicht erwiesen. Eine H₂-Versprödung konnte auf Dauer nicht verhindert werden, selbst wenn aufwendige Vakuum-Beschichtungsverfahren (Plasmabedampfung, Plasmapolymerisation) angewendet wurden. Offensichtlich sind Mehrschichtsysteme erforderlich, die Haftgrundlagen umfassen, welche eine bessere Haftung der Schutzschichten auf der relativ rauhen Oberfläche der Magnetwerkstoffe gewährleisten. Der technische Aufwand für die Aufbringung derartiger Schichtsysteme ist sehr hoch, was die ohnehin kostenaufwendigen Magnetlagerungen weiterhin verteuert. Weiterhin ist in der älteren, nicht vorveröffentlichten EP-A-3 32 979 die Möglichkeit offenbart, Schutzbleche einzusetzen, die auf die Stirnseiten der Lagerringe aufgeklebt werden. Klebeverbindungen im Vakuum sind jedoch problematisch. Schließlich ist aus der DE-A-17 50 602 eine auch für den Einsatz bei Vakuumpumpen geeignete magnetische Lagerung bekannt, bei der die Lagermagneten infolge der Existenz einer Trennhülse außerhalb des Vakuums liegen. Das Problem der Gefährdung der Magnete durch aggressive im Vakuum vorhandene Restgase ist nicht offenbart.

Der vorliegenden Erfindung liegt die Aufgabe zugrunde, Magneten, die in den Lagerringen von magnetgelagerten Vakuumpumpen verwendet werden sollen, wirkungsvoll vor aggressiven Gasen, insbesondere Wasserstoff, zu schützen.

Erfindungsgemäß wird diese Aufgabe durch die Merkmale der Patentansprüche gelöst. Dadurch, daß die Blechabschnitte mit den Trag- oder Stützelementen der Magnete durch Schweißen gasdicht verbunden werden, sind die Magnete selbst vollständig eingekapselt. Sie sind vor aggressiven Gasen, insbesondere Wasserstoff, sicher geschützt. Weiterhin verbessert die Kapselung die mechanische Stabilität der häufig körnigen Magnetwerkstoffe. Die Gefahr, daß sich oberflächennahe Werkstoffpartikel - z. B. infolge der Fliehkräfte - lösen und die Funktion der Lagerungen beeinträchtigen, besteht nicht mehr. Eine Beeinträchtigung der Magnetfelder und damit der Magnetkräfte durch die erfindungsgemäßen Blechabschnitte ist vernachlässigbar. Vorzugsweise bestehen die Blechabschnitte aus Edelstahl und haben eine Stärke von etwa 0,05 mm. Bleche dieser Art können in den ohnehin sehr engen Spalten von Permanentmagnetlagern untergebracht werden.

Weitere Vorteile und Einzelheiten der Erfindung sollen anhand von in den Figuren 1 bis 3 dargestellten Ausführungsbeispielen erläutert werden. Es zeigen
- Figur 1 einen Schnitt durch eine vereinfacht dargestellte Turbomolekularvakuumpumpe und
- Figuren 2 und 3 Teilschnitte durch Permanentmagnetlagerungen.

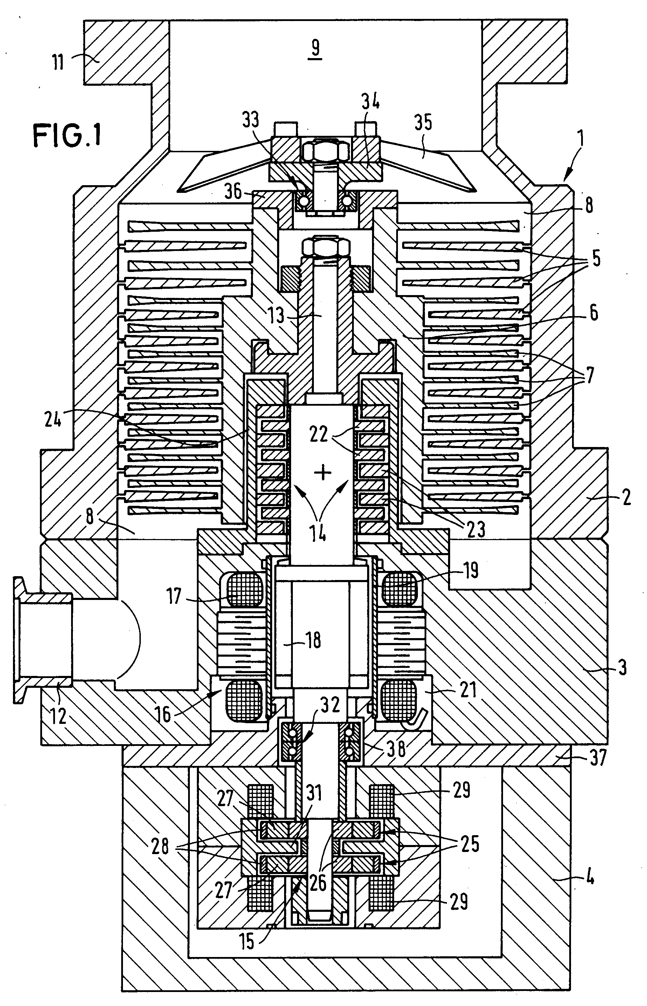

Die in Figur 1 dargestellte Turbomolekularvakuumpumpe 1 weist die Gehäuseteile 2, 3 und 4 auf. Das Gehäuseteil 2 bildet gleichzeitig den Stator und trägt die Statorschaufeln 5. Die Statorschaufeln 5 und die am Rotor 6 befestigten Rotorschaufeln 7 sind wechselnd in Reihen angeordnet und bilden den ringförmigen Gasförderkanal 8. Der Gasförderkanal 8 verbindet den Einlaß 9 der Pumpe 1, gebildet vom Anschlußflansch 11, mit dem Auslaß 12, an den üblicherweise eine Vorvakuumpumpe angeschlossen ist.

Der Rotor 6 ist auf einer Welle 13 befestigt, die sich ihrerseits über Magnetlagerungen 14 und 15 im Gehäuse der Pumpe 1 abstützt. Zwischen den beiden Magnetlagerungen 14 und 15 befindet sich der Antriebsmotor 16, der von der Spule 17 und dem mit der Welle 13 rotierenden Anker 18 gebildet wird. Der Antriebsmotor 16 ist als Spaltrohrmotor ausgebildet. Das zwischen Spule 17 und Anker 18 angeordnete Spaltrohr ist mit 19 bezeichnet. Die Spule 17 befindet sich in einem vom Spaltrohr und vom Gehäuseteil 3 gebildeten Raum 21, der für die von der Pumpe 1 geförderten Gase nicht zugänglich ist.

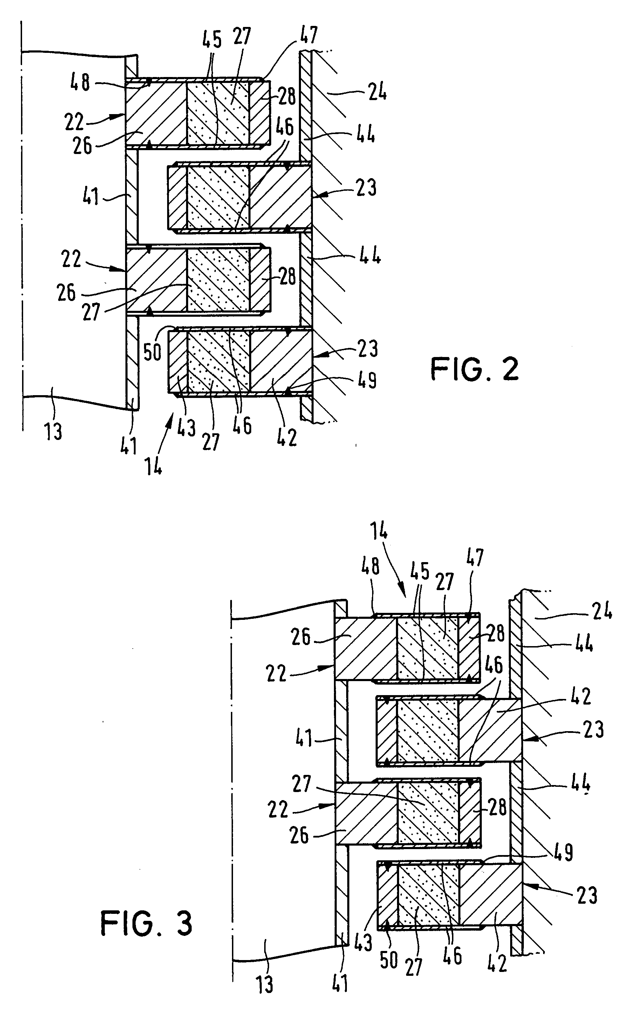

Das obere Magnetlager 14 ist als passives Magnetlager ausgebildet. Es besteht aus rotierenden Lagerringen 22, welche auf der Welle 13 befestigt sind, und ortsfesten Lagerringen 23, die von der Hülse 24 umgeben sind. Einzelheiten dieser Magnetlagerung 14 sind den Figuren 2 und 3 entnehmbar.

Das weitere Magnetlager 15 ist teilweise aktiv (in axialer Richtung) und teilweise passiv (in radialer Richtung) ausgebildet. Um dieses zu erreichen, sind auf der Welle 13 Lagerringen 25 befestigt, welche jeweils aus einem Nabenring 26, einem Permanentmagnetring 27 und einem Armierungsring 28 bestehen. Diese Armierungsringe haben die Aufgabe, Zerstörungen der Permanentmagnetringe 27 infolge der hohen Fliehkräfte zu vermeiden.

Den rotierenden Permanentringen 27 sind feststehende Spulen 29 zugeordnet. Diese bilden Magnetfelder, die mit Hilfe des durch die Spulen fließenden Stromes veränderbar sind. Die Änderungen des Spulenstromes erfolgen in Abhängigkeit von Axialsensoren, welche nicht dargestellt sind.

Im Spalt zwischen den mit der Welle rotierenden Lagerringen 25 befindet sich eine feststehende Ringscheibe 31 aus nicht magnetisierbarem Material hoher elektrischer Leitfähigkeit. Dieses Material bewirkt eine Lagerstabilisierung mit wirkungsvoller Wirbelstromdämpfung. Ein dem Magnetlager 15 entsprechendes Lager ist in der europäischen Patentschrift 155 624 offenbart.

Mit 32 und 33 sind Notlauflager bezeichnet. Das obere Notlauflager 33 ist an einem zentralen Träger 34 befestigt, der sich im Einlaßbereich 9 der Pumpe 1 befindet und über Stützen 35 am Gehäuseteil 2 abstützt. Dem Lager 33 ist am Rotor 6 eine Hülse 36 zugeordnet. Zwischen der Innenwand der Hülse 36 und dem Außenrig des Lagers 33 ist ein Spalt vorgesehen, so daß diese Bauteile einander nicht berühren, wenn der Rotor seine Soll-Lage hat. Führen größere Erschütterungen zu entsprechend größeren radialen Auslenkungen der Rotordrehachse, dann kommt ein Kontakt zwischen Hülse 36 und Notlauflager 33 zustande. Der Spalt zwischen Lager 33 und Hülse 36 ist so bemessen, daß die radialen Auslenkungen auf ein zulässiges Maß begrenzt sind.

Das untere Notlauflager 32, das mit der Welle 13 rotiert, ist im wesentlichen dazu bestimmt, schädliche axiale Abweichungen des Rotors 6 von der Soll-Lage zu verhindern. Dazu ist im Zwischenflansch 37 zwischen den Gehäuseteilen 3 und 4 eine zylindrische Ausnehmung 38 mit radialen Abstufungen vorgesehen, auf die sich der Außenring des Lagers 32 bei übermäßigen axialen Verschiebungen des Rotors 6 (z. B. bei einem Lufteinbruch im Einlaßbereich der Pumpe) aufsetzt.

In den Figuren 2 und 3 sind Teilschnitte durch das Permanentmagnetlager 14 dargestellt. Die rotierenden Lagerringe 22 weisen - wie auch die rotierenden Lagerringe 25 des unteren Magnetlagers 15 - jeweils einen Nabenring 26, einen Permanentmagnetring 27 und einen Armierungsring 28 auf. Die axiale Ausdehnung der Ringe ist identisch. Der Abstand der Lagerringe 22 ist durch Distanzringe 41 definiert, welche sich jeweils zwischen zwei rotierenden Lagerringen 22 auf der Welle 13 befinden.

Die ortsfesten Lagerringe 23 weisen jeweils einen äußeren Haltering 42, den Permanentmagnetring 27 und einen inneren Stützring 43 auf, ebenfalls mit jeweils identischer axialer Ausdehnung. Die in die Hülse 24 eingeschobenen Distanzringe 44 sorgen für den gewünschten Abstand der ortsfesten Lagerringe 23. Die Breite der Ringe 26, 28 und 42, 43 ist so gewählt, daß die ruhenden und die rotierenden Permanentmagnetringe 27 übereinander angeordnet sind.

Um die Magnetringe 27 sowohl der rotierenden als auch der ortsfesten Lagerringe 22, 23, 25 mechanisch zu stabilisieren und vor in die Lagerräume gelangenden aggressiven Gasen, insbesondere Wasserstoff, zu schützen, sind sie eingekapselt. Ihre radial inneren und radial äußeren Oberflächen sind von den unmittelbar anliegenden Ringen 26, 28 bzw. 42, 43 abgedeckt. Zusätzlich sind kreisringförmige Blechabschnitte 45 (bei den rotierenden Lagerringen 22, 25) und 46 (bei den ortsfesten Lagerringen 23) vorgesehen, welche die jeweils axial gerichteten Oberflächen der Magnetringe 27 abdecken. Die Breite der Ringe 45, 46 ist so gewählt, daß sie nicht nur unmittelbar die axial gerichteten Oberflächen der Permanentmagnetringe 27 abdecken, sondern auch noch die Bereiche, in denen die Ringe 26, 28 bzw. 42, 43 den Permanentmagneten 27 anliegen. Ein Eindringen schädlicher Gase in diese Bereiche ist damit ebenfalls verhindert.

Beim Ausführungsbeispiel nach Figur 2 erstrecken sich die Blechabschnitte 45 bis zur Innenkante des rotierenden Lagerringes 22. Das Aufbringen der Blechabschnitte 45 erfolgt in der Weise, daß zunächst der Lagerring 22 und ein Blechabschnitt 45 zentriert werden. Im Anschluß daran wird der äußere Rand des Blechabschnittes 45 mit dem Armierungsring 28 verschweißt. Zweckmäßig liegt der äußere Rand des Blechabschnittes 45 im Bereich der Mitte des Armierungsringes 28, so daß das Verschweißen mit Hilfe einer Kehlnaht 47 erfolgen kann.

Danach können die Zentriermittel entfernt und eine Verbindung des Blechabschnittes 45 mit dem Nabenring 26 durchgeführt werden. Dieses erfolgt zweckmäßig durch Durchschweißen (Naht 48). Dabei ist es vorteilhaft, die Naht 48 mit einem radialen Abstand von der Innenkante des Lagerringes 22 anzulegen, so daß die Distanzringe 41 ausreichend weit von den Schweißnähten 48 beabstandet sind. Der exakte axiale Abstand der Lagerringe 22 ist infolge dieser Maßnahme nicht durch ungleichmäßige Schweißnähte gefährdet. Die Distanzringe 41 stützen sich auf den Blechabschnitten 45 ab, so daß bei der Bemessung der Distanzringe 41 die Stärke der Blechabschnitte 45 berücksichtigt werden muß.

Die Aufbringung der Blechabschnitte 46 auf die ortsfesten Lagerringe 23 erfolgt entsprechend. Die Blechabschnitte 46 erstrecken sich von der Außenkante der Lagerringe 23 bis etwa in die Mitte der Stützringe 43. Nach einer äußeren Zentrierung erfolgt die Verbindung des jeweiligen Blechabschnittes 46 mit dem äußeren Haltering 42 durch Durchschweißen (Naht 49). Danach erfolgt das Anlegen der Kehlnaht 50 zur Verbindung der Blechabschnitte 46 mit dem inneren Stützring 43.

Beim Ausführungsbeispiel nach Figur 3 erstrecken sich die Blechabschnitte 45 vom äußeren Rand des Armierungsringes 28 bis etwa in die Mitte des Nabenringes 26. Das Aufbringen erfolgt wieder in der Weise, daß nach einer äußeren Zentrierung zunächst die Schweißnaht 47 (Herstellung der Verbindung des Armierungsringes 28 mit dem Blechabschnitt 45 durch Durchschweißen) und dann die innere Naht 48, in diesem Fall eine Kehlnaht, gelegt werden.

In der beschriebenen Weise können auch die Ringmagnete 27 der Lagerringe 25 des unteren Magnetlagers 15 gekapselt werden.

Bei den ortsfesten Lagerringen 23 erstrecken sich die Blechabschnitte 46 von der Innenkante bis etwa in die Mitte des äußeren Halteringes 42. Nach einer inneren Zentrierung wird zunächst die äußere Kehlnaht 49 gelegt und dann der jeweilige Blechabschnitt 46 mit dem inneren Stützring durch Durchschweißen (Naht 50) verbunden.

Dadurch, daß bei allen Ausführungen zunächst jeweils die äußere Schweißnaht zuerst gelegt wird, können durch das Schweißen hervorgerufene Wölbungen, die das Anlegen der zweiten Naht erschweren würden, vermieden werden. Als besonders vorteilhaft hat sich die Anwendung des Laserschweißverfahrens erwiesen.

Die den Permanentmagnetringen 27 anliegenden Ringe 26, 28 bzw. 42, 43 bestehen zweckmäßig aus Edelstahl, ebenfalls die Blechabschnitte 45, 46. Edelstahl ist gegen die vorkommenden Gase, insbesondere Wasserstoff, resistent. Extrem kleine Blechstärken (0,05 mm und weniger) können gewählt werden, so daß die für die Funktion von Magnetlagern wesentlichen geringen Abstände der rotierenden und festen Lagerelemente beibehalten werden können.

Um die Dichtheit der Schweißnähte prüfen zu können, ist es zweckmäßig, wenn die Kapselung der Magnetringe unter Helium (oder einem anderen Testgas) vorgenommen wird. Dadurch verbleibt in dem eingekapselten Ringraum, in dem sich der zu schützende Magnetring 27 befindet, ein Helium-Rest. Die fertigen Magnetlagerringe können danach einem Lecksuchprozeß unterworfen werden, indem sie beispielsweise in die Kammer eines Vakuum-Lecksuchers eingebracht werden. Unter Vakuum tritt Helium durch gegebenenfalls vorhandene Lecks aus und wird vom Lecksucher registriert. Lagerringe mit nicht vollständig dicht eingekapselten Magneten können somit ausgeschieden werden.

## Patentansprüche

1. Verfahren zur Herstellung eines Lagerringes (22, 23, 25) zur Verwendung in magnetgelagerten Vakuumpumpen, vorzugsweise Turbomolekularvakuumpumpen (1), mit einem inneren Naben- oder Stützring (26, 43), einem Permanentmagnetring (27) sowie einem äußeren Armierungs- oder Haltering (28, 42) und mit die axialen Seitenflächen der Magneten (27) abdeckenden Blechabschnitten (45, 46), wobei die Blechabschnitte (45, 46) mit den Ringen (26, 28 bzw. 42, 43) gasdicht verschweißt werden.

2. Verfahren nach Anspruch 1, wobei der Magnet (27) und die Ringe (26, 28 bzw. 42, 43) zunächst zu einer Ringscheibe zusammengefügt werden und nach einer Zentrierung der Blechabschnitte (innen oder außen) zunächst die äußere Schweißnaht (47, 49) und dann erst die innere Schweißnaht (48, 50) gelegt wird.

3. Verfahren nach Anspruch 2, wobei die Blechabschnitte (45, 46) entweder innen oder außen zentriert werden und ihre Breite derart gewählt wird, daß sie sich bis etwa in die Mitte der äußeren Ringe (28, 42) (bei einer Innenzentrierung) bzw. bis in die Mitte der inneren Ringe (26, 43) (bei einer Außenzentrierung) erstrecken, und dort, wo sich ein Blechabschnitt (45, 46) bis etwa in die Mitte eines Ringes (26, 28, 42, 43) erstreckt, das Verschweißen mit Hilfe einer Kehlnaht erfolgt und die Verbindung der Blechabschnitte (45, 46) mit dem jeweils zweiten Ring durch Durchschweißen erfolgt.

4. Verfahren nach Anspruch 1 oder 2, wobei das Laserschweißverfahren angewendet wird.

5. Verfahren nach Anspruch 1, 2, 3 oder 4, wobei die Herstellung der Lagerringe unter Helium oder einem anderen Testgas erfolgt.

6. Rotierender Lagerring (22) zur Verwendung in magnetgelagerten Vakuumpumpen, vorzugsweise Turbomolekularvakuumpumpen (1) mit einem inneren Nabenring (26), einem Permanentmagnetring (27) und einem äußeren Armierungsring (28), bei welchem die axialen Seitenflächen des Magneten (27) mit Blechabschnitten (45) abgedeckt sind, wobei die Blechabschnitte (45) mit dem Nabenring (26) und mit dem Armierungsring (28) verschweißt sind.

7. Lagerring nach Anspruch 6, wobei die innere Schweißnaht (48) vom Innenrand des Nabenringes (26) beabstandet ist.

8. Ortsfester Lagerring (23) zur Verwendung in magnetgelagerten Vakuumpumpen, vorzugsweise Turbomolekularvakuumpumpen (1) mit einem äußeren Haltering (42) einem Permanentmagnetring (27) und einen inneren Stützring (43), bei welchem die axialen Seitenflächen des Magneten (27) mit kreisringförmigen Blechabschnitten (46) abgedeckt sind, wobei . die Blechabschnitte (46) mit dem äußeren Haltering (42) und dem inneren Stützring (43) verschweißt sind.

9. Lagerring nach Anspruch 8, wobei die äußere Naht (49) von der Außenkante des Halteringes (42) beabstandet ist.

10. Lagerring nach einem der Ansprüche 6 bis 9, wobei die Blechabschnitte (45, 46) entweder innen oder außen zentriert sind und sich bis etwa in die Mitte der äußeren Ringe (28, 42) (bei einer Innenzentrierung) bzw. bis in die Mitte der inneren Ringe (26, 43) (bei einer Außenzentrierung) erstrecken.

11. Lagerring nach einem der Ansprüche 6 bis 10, wobei die Blechabschnitte (45, 46) aus Edelstahl bestehen.

12. Lagerring nach Anspruch 11, wobei die Blechstärke 0,05 mm beträgt.

## Claims

1. Method of producing a bearing ring (22, 23, 25) for use in magnetically-mounted vacuum pumps, preferably turbomolecular vacuum pumps (1), having an inner hub or support ring (26, 43), a permanent magnetic ring (27) and an outer mounting or holding ring (28, 42) and having sheet metal portions (45, 46) covering the axial side surfaces of the magnet (27), in which the sheet metal portions (45, 46) are welded in a gastight manner to the rings (26, 28 and 42, 43).

2. Method according to Claim 1, in which the magnet (27) and the rings (26, 28 and 42, 43) are firstly joined to form an annular disc and when the sheet metal portions have been centred (inwardly or outwardly) firstly the outer weld seam (47, 49) and only then the inner weld seam (48, 50) is applied.

3. Method according to Claim 2, in which the sheet metal portions (45, 46) are either centred internally or externally and their widths are selected such that they extend approximately to the centre of the outer rings (28, 42) (if they are centred internally) or to the centre of the inner rings (26, 43) (if they are centred externally), and at the point at which a sheet metal portion (45, 46) extends approximately to the centre of a ring (26, 28, 42, 43), welding is performed using a fillet weld and the sheet metal portions (45, 46) are connected to the second ring in each case by through-welding.

4. Method according to Claim 1 or 2, in which the laser welding method is used.

5. Method according to Claim 1, 2, 3 or 4, in which the bearing rings are produced using helium or some other test gas.

6. Rotating bearing ring (22) for use in magnetically mounted vacuum pumps, preferably turbomolecular vacuum pumps (1), having an inner hub ring (26), a permanent magnet ring (27) and an outer mounting ring (28), in the case of which the axial side surfaces of the magnet (27) are covered by sheet metal portions (45), in which the sheet metal portions (45) are welded to the hub ring (26) and to the mounting ring (28).

7. Bearing ring according to Claim 6, in which the inner weld seam (48) is at a spacing from the inner edge of the hub ring (26).

8. Rigid bearing ring (23) for use in magnetically mounted vacuum pumps, preferably turbomolecular vacuum, pumps (1), having an outer holding ring (42), a permanent magnet ring (27) and an inner support ring (43), in the case of which the axial side surfaces of the magnet (27) are covered by circular ring-shaped sheet metal portions (46), in which the sheet metal portions (46) are welded to the outer holding ring (42) and to the inner support ring (43).

9. Bearing ring according to Claim 8, in which the outer seam (49) is at a spacing from the outer edge of the holding ring (42).

10. Bearing ring according to any one of Claims 6 to 9, in which the sheet metal portions (45, 46) are either centred internally or externally and extend approximately to the centre of the outer rings (28, 42) (if they are centred internally) or to the centre of the inner rings (26, 43) (if they are centred externally).

11. Bearing ring according to any one of Claims 6 to 10, in which the sheet metal portions (45, 46) are made of high-grade steel.

12. Bearing ring according to Claim 11, in which the sheet metal is 0.05 mm thick.

## Revendications

1. Procédé pour la production d'une bague de palier (22, 23, 25) pour utilisation dans des pompes à vide montées sur des paliers magnétiques, de préférence des pompes à vide turbomoléculaires (1), comportant une bague de moyeu ou de soutien intérieure (26, 43), une bague à aimant permanent (27) ainsi qu'une bague d'armature ou de retenue extérieure (28, 42) et des sections de tôle (45, 46) qui recouvrent les surfaces latérales axiales des aimants (27), dans lequel les sections de tôle (45, 46) sont soudées de façon étanche aux gaz avec les bagues (26, 28 ou 42, 43).

2. Procédé selon la revendication 1, dans lequel l'aimant (27) et les bagues (26, 28 ou 42, 43) sont d'abord assemblés pour former une rondelle et, après un centrage des sections de tôle (à l'intérieur ou à l'extérieur), on réalise d'abord le cordon de soudure extérieur (47, 49) et ensuite le cordon de soudure intérieur (48, 50).

3. Procédé selon la revendication 2, dans lequel les sections de tôle (45, 46) sont centrées soit à l'intérieur soit à l'extérieur et leur largeur est choisie de telle sorte qu'elles s'étendent jusqu'à peu près au milieu des bagues extérieures (28, 42) (dans le cas d'un centrage intérieur) ou jusqu'au milieu des bagues intérieures (26, 43) (dans le cas d'un centrage extérieur), et à l'endroit où une section de tôle (45, 46) s'étend approximativement jusqu'au milieu d'une bague (26, 28, 42, 43), on réalise la soudure à l'aide d'un cordon de soudure en congé et la liaison des sections de tôle (45, 46) avec la seconde bague respective s'effectue par soudure traversante.

4. Procédé selon l'une ou l'autre des revendications 1 et 2, dans lequel on applique le processus de soudure par laser.

5. Procédé selon l'une quelconque des revendications 1, 2, 3, et 4, dans lequel la production des bagues de palier s'effectue sous de l'hélium ou sous un autre gaz d'épreuve.

6. Bague de palier rotative (22) pour l'utilisation dans des pompes à vide montées sur des paliers magnétiques, de préférence des pompes à vide turbomoléculaires (1) comportant une bague de moyeu intérieure (26), une bague à aimant permanent (27) et une bague d'armature extérieure (28), dans laquelle les surfaces latérales axiales de l'aimant (27) sont recouvertes par des sections de tôle (45), les sections de tôle (45) étant soudées avec la bague de moyeu (26) et avec la bague d'armature (28).

7. Bague de palier selon la revendication 6, dans laquelle le cordon de soudure intérieur (48) est à distance du bord intérieur de la bague de moyeu (26).

8. Bague de palier fixe (23) pour l'utilisation dans des pompes à vide montées sur des paliers magnétiques, de préférence des pompes à vide turbomoléculaires (1) comportant une bague de retenue extérieure (42), une bague à aimant permanent (27) et une bague de soutien intérieure (43), dans laquelle les surfaces latérales axiales de l'aimant (27) sont recouvertes par des sections de tôle de forme circulaire (46), les sections de tôle (46) étant soudées avec la bague de retenue extérieure (42) et avec la bague de soutien intérieure (43).

9. Bague de palier selon la revendication 8, dans laquelle le cordon de soudure extérieur (49) est à distance de l'arête extérieure de la bague de retenue (42).

10. Bague de palier selon l'une quelconque des revendications 6 à 9, dans laquelle les sections de tôle (45, 46) sont centrées soit à l'intérieur soit à l'extérieur et s'étendent approximativement jusqu'au milieu des bagues extérieures (28, 42) (dans le cas d'un centrage intérieur), ou jusqu'au milieu des bagues intérieures (26, 43) (dans le cas d'un centrage extérieur).

11. Bague de palier selon l'une quelconque des revendications 6 à 10, dans laquelle les sections de tôle (45, 46) sont constituées en acier inoxydable.

12. Bague de palier selon la revendication 11, dans laquelle l'épaisseur de la tôle s'élève à 0,05 mm.
